# EUROPÄISCHE PATENTSCHRIFT

(11) **EP 2 727 479 B1**
(45) Veröffentlichungstag und Bekanntmachung des Hinweises auf die Patenterteilung: **23.08.2017**
(21) Anmeldenummer: 13191126.5
(22) Anmeldetag: 31.10.2013
(51) Int. Cl.: A24C 5/32, B65G 51/02, F16L 37/26, A24C 5/345

(54) **Einrichtung zum Überführen stabförmiger Artikel der Tabak verarbeitenden Industrie von einer Sendereinheit an eine Empfängereinheit**
Device for transferring rod-shaped articles of the tobacco processing industry from a transmitter unit to a receiver unit
Dispositif de transfert d'articles en forme de tiges de l'industrie de traitement du tabac depuis une unité émettrice vers une unité réceptrice

(30) Priorität: 01.11.2012 DE 102012110470
(43) Veröffentlichungstag der Anmeldung: 07.05.2014
(73) Patentinhaber: Hauni Maschinenbau GmbH, 21033 Hamburg (DE)
(72) Erfinder: Hartmann, Florian, 21502 Geesthacht (DE)
(74) Vertreter: Stork Bamberger Patentanwälte PartmbB

(56) Entgegenhaltungen:
- DE-A1- 4 338 369
- DE-A1- 10 002 753
- US-A- 1 838 574
- US-A- 3 318 327

## Beschreibung

Die Erfindung betrifft eine Einrichtung, ausgebildet und eingerichtet zum Überführen stabförmiger Artikel der Tabak verarbeitenden Industrie von einer Sendereinheit an eine Empfängereinheit, umfassend mindestens eine Rohrleitung zum Überführen der Artikel von der Sendereinheit an die Empfängereinheit sowie eine Ausschleuseeinheit zum Ausschleusen der Artikel aus der Rohrleitung, wobei die Ausschleuseeinheit aus einer Förderstellung zum Durchleiten der Artikel durch die Rohrleitung in eine Ausschleusestellung zum Ausschleusen der Artikel aus der Rohrleitung und zurück bewegbar ausgebildet ist.

Solche Einrichtungen kommen in der Tabak verarbeitenden Industrie zum Einsatz. Zigaretten und insbesondere Filterstäbe oder dergleichen werden aus unterschiedlichen Gründen in Behältern, den so genannten Schragen aufbewahrt. Zur Weiterverarbeitung müssen diese Artikel wieder in den Produktionsprozess eingeschleust bzw. an weiter verarbeitende Vorrichtungen bzw. Maschinen gesendet werden. Dabei ist es notwendig, die stabförmigen Artikel und insbesondere Filterstäbe schnell und zuverlässig über unterschiedliche Distanzen in ihrer Längserstreckung axial zu fördern. Der Sammelbegriff Filterstäbe umfasst einfache Acetat-Monofilterstäbe, Charcoal-Filterstäbe, Multisegmentfilterstäbe, Profilfilterstäbe, Kreppfilterstäbe sowie jede andere Form von Sonderfilterstäben. Zum axialen Fördern werden die Filterstäbe mittels einer Sendereinheit einer Ausblaszone zugeführt und über die Förderleitung an eine Empfängereinheit gesendet. Diese Förderleitung ist üblicherweise eine pneumatische Rohrleitung, in der die Artikel mit Druckluft transportiert werden, weshalb man auch davon spricht, dass die Artikel von der Sendereinheit an die Empfängereinheit geschossen werden. Beim Senden bzw. Schießen der Artikel durch die Rohrleitung besteht die Möglichkeit bzw. die Gefahr, dass innerhalb der Rohrleitung ein sich aus Artikeln bildender Rohrstau entsteht. Genauer handelt es sich um einen Artikelstau innerhalb der Rohrleitung. Ein solcher Rohrstau kann z.B. durch defekte Artikel oder Verschmutzungen bzw. Ablagerungen innerhalb der Rohrleitungen entstehen und führt zum Stillstand der aus Sendereinheit, Rohrleitung und Empfängereinheit gebildeten Anordnung, weshalb der Rohrstau behoben werden muss. Zum Beheben des Rohrstaus muss die Rohrleitung im Bereich einer Trennfuge geöffnet werden. An der Trennfuge der Rohrleitung müssen die in der Rohrleitung befindlichen Artikel die Rohrleitung verlassen, indem sie ausgeblasen werden.

Bei bekannten Lösungen aus der Praxis ist die Rohrleitung mit einem Schnellverschluss unter Bildung der Trennfuge z.B. an der Sendereinheit angeschlossen. Dieser Schnellverschluss ist manuell zu lösen. Ebenfalls manuell ist eine Ausblaseinheit zu aktivieren, mittels der die Artikel aus der Rohrleitung geblasen werden. Aus der DE 100 02 753 A1 ist eine Einrichtung zu entnehmen bei der Rohrleitung eine Ausschleuseeinheit zugeordnet ist, die zwischen zwei Positionen, nämlich der Förderstellung und der Ausschleusestellung hin und her bewegbar ist. In der Förderstellung gewährleistet die Ausschleuseeinheit das Durchleiten der Artikel durch die gesamte Rohrleitung und schließt quasi den dann durchgängigen und einen Senderbetrieb ermöglichenden Förderweg der Rohrleitung. In der Ausschleusestellung sind die Rohrleitung und damit der Förderweg unterbrochen und geöffnet, so dass die Artikel bei unterbrochenem Senderbetrieb aus der Rohrleitung geblasen werden können. Die bekannte Ausschleuseeinheit ist dabei aus einem flexiblen Rohrabschnitt gebildet, der im Eingangsbereich der Empfängereinheit angeordnet ist. Der Rohrabschnitt ist zum Beheben des Rohrstaus auslenkbar. Dazu ist dem Rohrabschnitt ein Antriebsmittel in Form eines Druckzylinders zum Ausführen eines Querhubs zugeordnet. Der Rohrabschnitt ist im Bereich einer Trennfuge zwischen dem auslenkbaren Rohrabschnitt und der Empfängereinheit oder einem anderen ortsfesten Rohrabschnitt stirnseitig gedichtet. Mit anderen Worten verläuft die Trennfuge senkrecht zur Mittelachse der Rohrleitung. Eine Einrichtung mit den Merkmalen des Oberbegriffs des Anspruchs 1 ist der DE 43 38 369 A zu entnehmen. Die bestehenden Einrichtungen weisen somit den Nachteil auf, dass sie zum einen nur eine begrenzte Dichtwirkung aufweisen, da die Dichtkräfte zwischen dem auslenkbaren Rohrabschnitt und der sich daran anschließenden Dichtfläche ausschließlich in längsaxialer Richtung wirken. Mit anderen Worten sind die bisherigen Einrichtungen nicht als druckdichte Systeme ausgebildet und eingerichtet. Zum anderen reduziert auch der Querhub die Dichtwirkung und führt im Übrigen aufgrund der Scherwirkung auf die Dichtmittel zu einem erhöhten Verschleiß der Dichtmittel.

Der Erfindung liegt demnach die Aufgabe zugrunde, eine einfache und druckdichte Einrichtung zu schaffen, mittels der Artikel schnell und zuverlässig aus einer Rohrleitung ausgeschleust werden können.

Diese Aufgabe wird durch eine Einrichtung mit den eingangs genannten Merkmalen dadurch gelöst, dass die Ausschleuseeinheit als Teil der Rohrleitung in diese integriert ist und zur druckdichten Abdichtung der Rohrleitung bezogen auf die Mittelachse der Rohrleitung mindestens eine schräge Dichtfläche aufweist. Mit dieser Ausbildung wird auf überraschend einfache und sichere Weise sichergestellt, dass die gesamte Einrichtung aus Rohrleitung und Ausschleuseeinheit im Senderbetrieb druckdicht ist. Durch die oder jede schräge Dichtfläche kann die Druckdichtigkeit der Rohrleitung für den Fall eines Rohrstaus jedoch schnell und einfach aufgelöst und ebenso schnell und einfach wiederhergestellt werden. Die Abschrägung der oder jeder Dichtfläche führt zu einer queraxialen bzw. radialen Kraftkomponente, die auf die oder jede Dichtfläche wirkt und damit die Dichtwirkung bis hin zu einer 100%-Dichtung erhöht. Die Integration der Ausschleuseeinheit in die Rohrleitung als Bestandteil der Rohrleitung sowie die bezogen auf die Mittelachse der Rohrleitung schräg verlaufende Trennfuge vereinfachen auch das exakte und für die Dichtmittel belastungsfreie aufeinander zu und voneinander weg Bewegen beim Öffnen und Schließen der Rohrleitung. Als schräge Dichtflächen gelten alle Dichtflächen, deren Neigung gegenüber der Mittelachse der Rohrleitung ungleich 90° beträgt. Anders ausgedrückt verläuft die im Bereich der aneinander liegenden Dichtflächen gebildete Trennfuge der Rohrleitung gerade nicht in einem rechten Winkel sondern geneigt zur Mittelachse der Rohrleitung.

Eine besonders bevorzugte Weiterbildung der Erfindung zeichnet sich dadurch aus, dass die Ausschleuseeinheit zwei Kopplungselemente umfasst, von denen ein Kopplungselement ortsfest fixiert und das andere Kopplungselement relativ zum ortsfesten Kopplungselement bewegbar ausgebildet ist, wobei die Kopplungselemente an ihren einander zugewandten Stirnseiten derart abgeschrägt sind, dass sie unter einem Winkel von 30-60°, bevorzugt von 45° bezogen auf die Mittelachse der Rohrleitung zur Bildung einer im Bereich einer einzigen Dichtfläche liegenden Trennfuge zueinander stehen. Mit dieser Ausführungsform wird eine besonders hohe Druckdichtigkeit der Einrichtung erreicht. Das Bilden der Trennfuge unter einem Winkel von 30-60° und bevorzugt von etwa 45° ermöglicht einerseits ein einfaches und präzises Öffnen und Schließen der Rohrleitung und gewährleistet andererseits eine hohe Kraftkomponente in radialer Richtung zum Dichten der Ausschleuseeinheit im Senderbetrieb. Der Begriff "etwa" bedeutet, dass der Winkel nicht exakt 45° betragen muss sondern auch um einige Grad abweichen kann.

Vorteilhafterweise sind die beiden Kopplungselemente zylindrisch geformt und durch einen im Bereich der abgeschrägten Stirnseiten diagonal eingesetzten Dichtring im Bereich der Dichtfläche gegeneinander abgedichtet. Die zylindrische Form der Kopplungselemente sowie die daraus resultierende Zylinderfläche ermöglichen ein gegenseitiges Zentrieren der Kopplungselemente beim Schließen der Rohrleitung und gewährleisten eine hohe Dichtigkeit.

Eine zweckmäßige Ausführung ist dadurch gekennzeichnet, dass die Ausschleuseeinheit an dem der Sendereinheit zugewandten Ende der Rohrleitung angeordnet ist. Damit wird das Beheben eines Rohrstaus vereinfacht. Des Weiteren kann das ortsfeste Kopplungselement auf einfache Weise besonders starr bzw. steif ausgebildet sein, was die Dichtigkeit erhöht, da das bewegbare Kopplungselement beim Schließen der Rohrleitung mit hoher Kraft gegen das ortsfeste Kopplungselement gedrückt werden kann.

Eine erfindungsgemäße Weiterbildung sieht vor, dass dem bewegbaren Kopplungselement ein Pneumatikzylinder für eine senkrecht zur Mittelachse der Rohrleitung gerichtete Bewegung des bewegbaren Kopplungselementes auf das ortsfeste Kopplungselement zu und von diesem weg zugeordnet ist. Die senkrechte bzw.im Wesentlichen senkrechte Bewegung ist besonders einfach und schnell mittels des vorzugsweise pneumatisch betriebenen Druckzylinders ausführbar, um die Rohrstaubehebung möglichst schnell und dennoch zuverlässig ausführen zu können.

Vorzugsweise ist das bewegbare Kopplungselement in einer senkrecht zur Mittelachse der Rohrleitung gerichteten Linearführung geführt. Durch das Vorsehen einer Linearführung für das bewegbare Kopplungselement senkrecht zur Mittelachse der Rohrleitung kann für die Kopplungselemente im Bereich der abgewinkelten Kontaktflächen eine besonders hohe Dichtigkeit erzielt werden, da die Zwangsführung gepaart mit der Winkelstellung eine besonders effektiv wirkende Kraftkomponente auf die im Bereich der Kontaktfläche angeordneten Dichtmittel gewährleistet.

Vorteilhafterweise ist eine Kolbenstange des Pneumatikzylinders beweglich im Bereich eines Drehpunktes an dem bewegbaren Kopplungselement angeordnet. Damit wird ein Verkanten des bewegbaren Kopplungselementes gegenüber der Linearführung verhindert, so dass die Kontaktflächen der Kopplungselemente stets in der optimalen Dichtstellung zueinander stehen.

Eine zweckmäßige Weiterbildung ist dadurch gekennzeichnet, dass den Kopplungselementen Mittel zum Abscheren von im Bereich der Trennfläche bzw. Dichtfläche befindlichen Artikeln zugeordnet sind. Beim Öffnen der Rohrleitung zum Beheben des Rohrstaus kommt es häufig vor, dass direkt im Bereich der Trennfläche bzw. Dichtfläche, also an der Trennfuge der Kopplungselemente, Artikel liegen. Diese Artikel werden durch das Mittel zum Abscheren getrennt bzw. geteilt, so dass ein Blockieren der Rohrleitung und der Ausschleuseeinheit wirksam verhindert wird.

Eine bevorzugte Ausgestaltung der erfindungsgemäßen Einrichtung zeichnet sich dadurch aus, dass die Ausschleuseeinheit aus einem sich nur teilweise über den Umfang der Rohrleitung erstreckenden Rohrabschnitt der Rohrleitung selbst gebildet ist, wobei der Rohrabschnitt mittels eines Antriebs auf die Rohrleitung zu und von dieser weg bewegbar ausgebildet ist. Mit anderen Worten ist ein Teil der Mantelfläche der Rohrleitung ausgeschnitten, das als passgenaues Schließelement in die Rohrleitung eingepasst ist und zu Zwecken der Öffnung der Rohrleitung aus der Rohrleitung herauslösbar ist. Diese erfindungsgemäße Lösung gewährleistet eine besonders hohe Dichtigkeit und stellt im Senderbetrieb eine stoßstellenfreie Rohrleitung bereit. Das Öffnen und Schließen der Rohrleitung kann mit dieser Ausbildung besonders schnell und sicher ausgeführt werden. Ein weiterer Vorteil besteht darin, dass auf Mittel zum Abscheren grundsätzlich verzichtet werden kann, da durch das Herauslösen des Rohrabschnittes eine ausreichend große Öffnung geschaffen wird, aus der im Bereich der Ausschleuseeinheit befindliche Artikel ohne Hilfsmittel herausfallen können.

Zweckmäßigerweise umfasst die Ausschleuseeinheit zusätzlich ein Ablenkmittel, wobei das Ablenkmittel zum Eingriff in den durch die Rohrleitung definierten Förderweg ausgebildet und eingerichtet ist. Um sicherzustellen, dass die Artikel beim Ausblasen aus der Rohrleitung diese auch tatsächlich verlassen, kann das Ablenkmittel z.B. als mechanisches Element in den Förderweg bzw. die Flugbahn der Artikel bewegt werden. Ein anderes Ablenkmittel kann z.B. durch eine Druckluftdüse gebildet sein, wobei die Flugbahn der Artikel durch einen Druckluftstrahl umgelenkt wird. Mit dem Ablenkmittel wird die Rohrstaubehebung unterstützt.

Eine bevorzugte Weiterbildung dieser Ausführungsform ist dadurch gekennzeichnet, dass der Rohrabschnitt dreieckförmig ausgebildet ist und entsprechend zwei gegenüber der Rohrleitung abgeschrägte Dichtflächen aufweist, die jeweils in einem Winkel von 30-60°, bevorzugt von 45° bezogen auf die Mittelachse der Rohrleitung und entsprechend 90° zueinander stehen. Diese Ausführungsform gewährleistet eine passgenaue und damit absolut dichte Verbindung zwischen dem bewegbaren Rohrabschnitt und der Rohrleitung.

Eine weitere bevorzugte Ausgestaltung der erfindungsgemäßen Einrichtung zeichnet sich dadurch aus, dass die Ausschleuseeinheit aus einem Rohrsegment, das Bestandteil der Rohrleitung ist, gebildet ist, wobei das Rohrsegment um eine senkrecht zur Mittelachse der Rohrleitung verlaufende Achse schwenkbar ausgebildet ist. Mit dieser Ausführungsform werden die bereits zuvor beschriebenen Vorteile ebenfalls erreicht. Durch das Herausschwenken eines Rohrsegmentes werden die im Bereich der beiden Dichtflächen befindlichen Artikel beim Öffnen der Rohrleitung zwangsläufig ohne zusätzliche Abschermittel getrennt. Diese Lösung erfordert auch nur einen geringen Kraftaufwand beim Schließen und Dichten der Rohrleitung.

Vorteilhafterweise ist die Achse, um die das Rohrsegment schwenkbar ist, bezogen auf die Länge des Rohrsegments etwa mittig angeordnet und verläuft senkrecht zur Mittelachse M. Dadurch wirken die jeweiligen Kraftkomponenten beim Schließen und Dichten gleichmäßig und symmetrisch auf beide Dichtflächen.

Eine zweckmäßige Weiterbildung ist dadurch gekennzeichnet, dass das Rohrsegment an seinen entgegengesetzten freien Enden jeweils eine gegenüber der Rohrleitung abgeschrägte Dichtfläche aufweist. Diese parallel ausgerichteten Dichtflächen ermöglichen das freie Schwenken des Rohrsegments und schaffen im Senderbetrieb eine stoßstellenfreie Rohrleitung.

Weitere zweckmäßige und/oder bevorzugte Merkmale und Weiterbildungen der Einrichtung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung einer in eine Anordnung zum Überführen stabförmiger Artikel der Tabak verarbeitenden Industrie eingebundene Einrichtung, die zum überführen der Artikel ausgebildet und eingerichtet ist,
- Fig. 2: eine schematische Darstellung einer ersten Ausführungsform einer Ausschleuseeinheit in geöffneter Position der Rohrleitung in Seitenansicht,
- Fig. 3: die Ausschleuseeinheit gemäß Figur 2 in perspektivischer Darstellung,
- Fig. 4: eine schematische Darstellung einer weiteren Ausführungsform einer Ausschleuseeinheit in nahezu geschlossener Position der Rohrleitung in Seitenansicht,
- Fig. 5: die Ausschleuseeinheit gemäß Figur 4 in geöffneter Position der Rohrleitung,
- Fig. 6: eine schematische Darstellung einer weiteren Ausführungsform einer Ausschleuseeinheit in nahezu geschlossener Position der Rohrleitung in Seitenansicht, und
- Fig. 7: die Ausschleuseeinheit gemäß Figur 6 in geöffneter Position der Rohrleitung.

Die in der Zeichnung dargestellten Einrichtungen sind zum Überführen von Filterstäben mittels Druckluft von einer Sendereinheit an eine Empfängereinheit ausgebildet und eingerichtet. Selbstverständlich bezieht sich die Erfindung auch auf Einrichtungen zum Überführen aller anderen stabförmigen Artikel, die Filtermaterial und/oder Tabakmaterial enthalten. Die dargestellten Einrichtungen können als separate Nachrüsteinrichtungen oder als Bestandteil einer Anordnung zum überführen der stabförmigen Artikel eingesetzt werden.

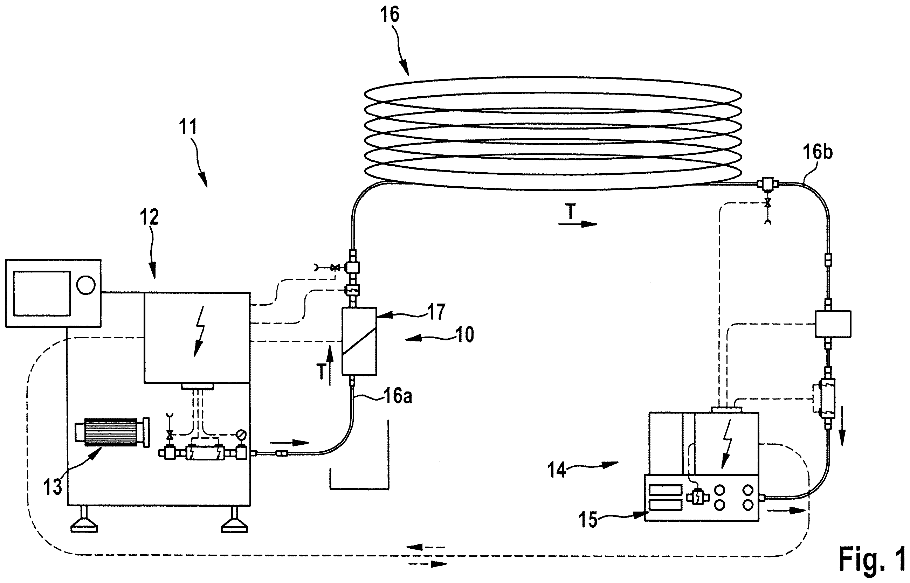

Anhand der Figur 1 wird zum besseren Verständnis der Erfindung sowie zu dem bevorzugten Einsatzgebiet der erfindungsgemäßen Einrichtung 10 zunächst ganz schematisch eine Anordnung 11 zum Überführen der Filterstäbe 50 beschrieben. Eine solche Anordnung 11 umfasst mindestens eine Sendereinheit 12 mit mindestens einem Sendermodul 13 zum Senden der Filterstäbe 50 in Transportrichtung T sowie mindestens eine Empfängereinheit 14 mit mindesten einem Empfängermodul 15 zum Empfangen der Filterstäbe 50. Die Sendereinheit 12 und die Empfängereinheit 14 bzw. jedes Sendermodul 13 und jedes Empfängermodul 15 sind jeweils über die Einrichtung 10 miteinander verbunden. Alternativ kann die Anordnung 11 auch mehrere Sendereinheiten 12 mit jeweils mehr als einem Sendermodul 13 und/oder mehrere Empfängereinheiten 14 mit jeweils mehr als einem Empfängermodul 15 aufweisen. Entsprechend sind dann für die letztgenannten Ausführungsformen mehrere Einrichtungen 10 vorgesehen. Diese Anordnungen 11 umfassen mindestens eine Steuereinrichtung zum Senderbetrieb.

Jede der genannten Einrichtungen 10 ist zum Überführen der Filterstäbe 50 ausgebildet und eingerichtet und umfasst mindestens eine Rohrleitung 16 zum Überführen der Filterstäbe 50von der Sendereinheit 12 an die Empfängereinheit 14 sowie eine Ausschleuseeinheit 17 zum Ausschleusen der Filterstäbe 50 aus der Rohrleitung 16. Die Ausschleuseeinheit 17 ist aus einer Förderstellung zum Durchleiten der Filterstäbe 50 durch die Rohrleitung 16 in Transportrichtung T in eine Ausschleusestellung zum Ausschleusen der Filterstäbe 50 aus der Rohrleitung 16 und zurück bewegbar. Im Senderbetrieb befindet sich die Ausschleuseeinheit 17 in der Förderstellung. Außerhalb des Senderbetriebs und insbesondere für eine Rohrstaubehebung befindet sich die Ausschleuseeinheit 17 in der Ausschleusestellung.

Eine solche Einrichtung 10 zeichnet sich erfindungsgemäß dadurch aus, dass die Ausschleuseeinheit 17 als Teil der Rohrleitung 16 in diese integriert ist und zur druckdichten Abdichtung der Rohrleitung 16 bezogen auf die Mittelachse M der Rohrleitung mindestens eine schräge Dichtfläche 18 aufweist. Das bedeutet, dass die Ausschleuseeinheit 17 im Senderbetrieb Teil des Förderweges der Filterstäbe 50 durch die pneumatische Rohrleitung 16 und damit Bestandteil der druckdichten Anordnung 11 ist. Im Senderbetrieb, also bei geschlossener Rohrleitung 16, liegt die oder jede Dichtfläche 18 als Trennfuge 23 schräg zur Mittelachse M der Rohrleitung 16. Bei geöffneter Rohrleitung 16 z.B. zur Rohrstaubehebung sind die Rohrleitung 16 und damit der Förderweg im Bereich der oder jeder Trennfuge 23 unterbrochen. Anders ausgedrückt ist die im Senderbetrieb durchgängige Rohrleitung 16 im Ausschleusebetrieb mindestens teilweise geöffnet.

Die im Folgenden beschriebenen Merkmale und Weiterbildungen stellen für sich betrachtet oder in Kombination miteinander bevorzugte Ausführungsformen der Erfindung dar. Es wird ausdrücklich darauf hingewiesen, dass Merkmale, die in den Ansprüchen zusammengefasst sind, auch eigenständig die weiter oben beschriebene Einrichtung 10 weiterbilden können.

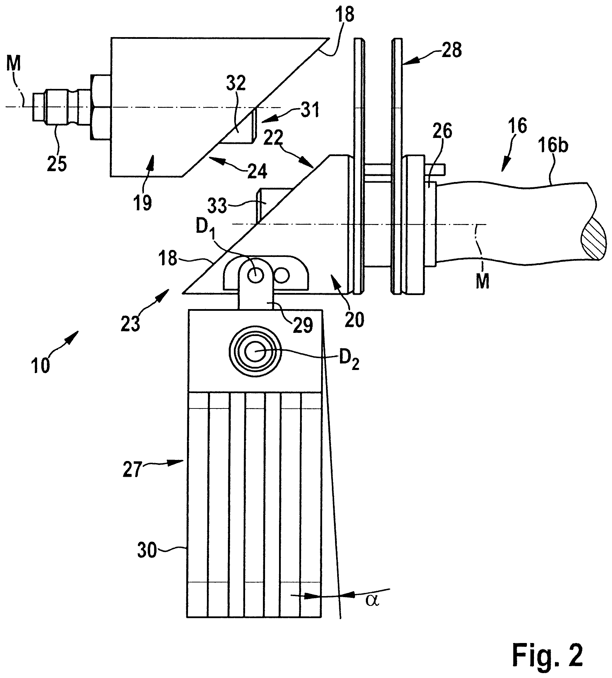

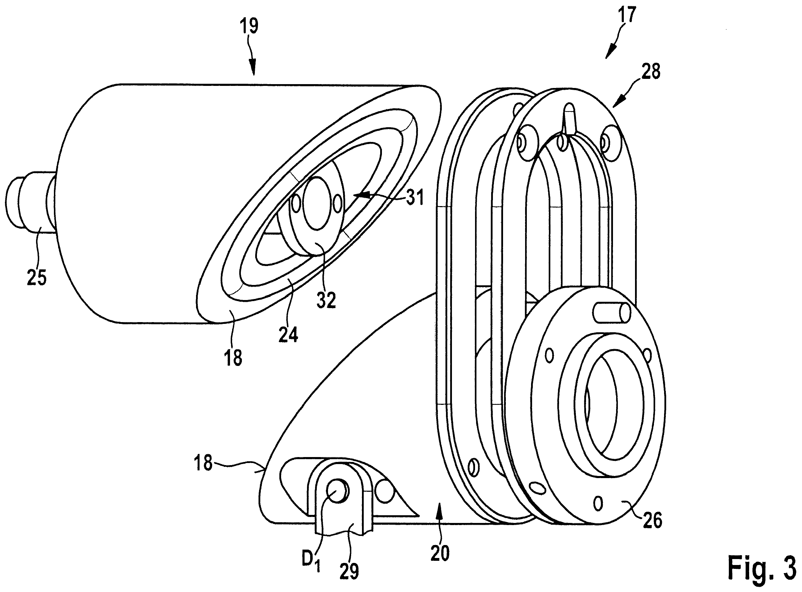

Eine besonders bevorzugte Ausführungsform der Einrichtung 10 wird anhand der Figuren 2 und 3 näher erläutert. In dieser Ausführungsform umfasst die Ausschleuseeinheit 17 zwei Kopplungselemente 19, 20, von denen ein Kopplungselement 19 ortsfest fixiert und das andere Kopplungselement 20 relativ zum ortsfesten Kopplungselement 19 bewegbar ausgebildet ist. Welches der Kopplungselemente 19, 20 ortsfest und welches bewegbar ist, ist für die tatsächliche Funktion einer Rohrleitungskupplung unerheblich. Allerdings ist vorzugsweise das der Sendereinheit 12 zugewandte Kopplungselement 19 ortsfest. Dabei bedeutet ortsfest nicht, dass nicht auch dieses Kopplungselement 19 z.B. zu Einstellungszwecken vorzugsweise in linearer Richtung in Transportrichtung T bewegbar sein kann. Die Kopplungselemente 19, 20 sind an ihren einander zugewandten Stirnseiten 21, 22 derart abgeschrägt, dass sie unter einem Winkel von etwa 45° bezogen auf die Mittelachse M der Rohrleitung 16 zur Bildung einer Trennfläche bzw. der einzigen Dichtfläche 18 zueinander stehen. Die Größe des Winkels kann auch von 45° abweichen. Mit "etwa" wird ein Winkel bezeichnet, der um wenige Grad von 45° abweicht. Anders ausgedrückt kommt es nicht auf jeden einzelnen Winkelgrad an. In anderen nicht gezeigten Ausführungsformen kann dieser Winkel aber z.B. auch 30° betragen. Die Dichtfläche 18 bildet bei geschlossener Rohrleitung 16 und damit bei einer Ausschleuseeinheit 17 in Förderstellung die schräg verlaufende Trennfuge 23, wobei die Rohrleitung 16 dann insgesamt und insbesondere auch an der Trennfuge 23 druckdicht ausgebildet ist.

Vorzugsweise sind die Kopplungselemente 19, 20 zylindrisch geformt und durch einen im Bereich der abgeschrägten Stirnseiten 21, 22 diagonal eingesetzten Dichtring 24 im Bereich der Dichtfläche 18 gegeneinander abgedichtet. Bevorzugt ist der Dichtring 24 einem der Kopplungselemente 19, 20, in der gezeigten Ausführungsform dem ortsfesten Kopplungselement 19 zugeordnet. Alternativ können aber auch beide Kopplungselemente 19, 20 über einen Dichtring 24 oder andere passende Dichtmittel verfügen. Die zylindrischen Kopplungselemente 19, 20 bilden eine Durchgangskupplung. Das bedeutet, dass die hohlzylindrischen Kopplungselemente 19, 20 eine Art Rohrleitungsverlängerung bzw. Rohrleitungsadapter darstellen, die ein Durchleiten der Filterstäbe 50 gewährleisten.

Die gesamte Ausschleuseeinheit 17 ist vorzugsweise an dem der Sendereinheit 12 zugewandten Ende der Rohrleitung 16 angeordnet. Das bedeutet beispielsweise, dass die Ausschleuseeinheit 17 direkt zwischen der Sendereinheit 12 und der Rohrleitung 16 als Teil derselben angeordnet ist. In anderen Ausführungsformen kann die Ausschleuseeinheit 17 aber auch zwischen zwei die Rohrleitung 16 bildenden Rohrleitungsabschnitten 16a, 16b an jeder beliebigen Position angeordnet sein. Zum Befestigen der Ausschleuseeinheit 17 an den die Rohrleitung 16 bildenden Rohrleitungsabschnitten 16a, 16b bzw. an der Sendereinheit 12 und/oder der Empfängereinheit 14 weisen die Kopplungselemente 19, 20 Anschlusselemente 25, 26 auf. Im gezeigten Ausführungsbeispiel weist das ortsfeste Kopplungselement 19 auf der der Dichtfläche 18 bzw. Trennfuge 23 abgewandten Seite ein Anschlusselement 25 auf, das zum direkten Anschließen an die Sendereinheit 12 ausgebildet und eingerichtet ist. Das Anschlusselement 26 des bewegbaren Kopplungselementes 20 auf der der Dichtfläche 18 bzw. der Trennfuge 23 abgewandten Seite ist zum direkten Anschließen an die Rohrleitung 16 bzw. den Rohrleitungsabschnitt 16b ausgebildet und eingerichtet. Vorzugsweise ist die Rohrleitung 16 bzw. der Rohrleitungsabschnitt 16b, der an das bewegbare Kopplungselement 20 angeschlossen ist, flexibel ausgebildet. Es können jedoch auch starre Rohrleitungen 16 bzw. Rohrleitungsabschnitte 16a, 16b eingesetzt werden.

Zum Bewegen des bewegbaren Kopplungselementes 20 aus der Förderstellung in die Ausschleusestellung und zurück ist diesem ein Pneumatikzylinder 27 zugeordnet. Mittels des Pneumatikzylinders 27 ist das bewegbare Kopplungselement 20 im Wesentlichen senkrecht zur Mittelachse M der Rohrleitung 16 auf das ortsfeste Kopplungselement 19 zu und von diesem weg bewegbar. Andere Antriebsmittel zum Schließen und Öffnen der Rohrleitung 16 durch Betätigen des bewegbaren Kopplungselementes 20 sind aber ebenfalls einsetzbar. Wie erwähnt, ist die Bewegungsrichtung des Kopplungselementes 20 "im Wesentlichen" senkrecht. Das bedeutet, dass auch eine leichte Schrägstellung des Pneumatikzylinders um wenige Grad aus der Senkrechten heraus möglich ist.

Das bewegbare Kopplungselement 20 ist in einer Linearführung 28 geführt. Diese Linearführung 28 ist derart ausgebildet und angeordnet, dass das Kopplungselement 20 mit dem daran angeschlossenen Rohrleitungsabschnitt 16b bei der Ausübung der Bewegung auf das ortsfeste Kopplungselement 19 zu und von diesem weg aber insbesondere beim Schließen der Ausschleuseeinheit 17 im Wesentlichen senkrecht zur Mittelachse M zwangsgeführt ist. Zum Ausführen der geführten Bewegungen des bewegbaren Kopplungselementes 20 ist eine Kolbenstange 29 des Pneumatikzylinders 27 beweglich im Bereich eines Drehpunktes D₁ an dem bewegbaren Kopplungselement 20 angeordnet. Zusätzlich zum Drehpunkt D₁ kann optional ein weiterer Drehpunkt D₂ für den Pneumatikzylinder 27 vorgesehen sein, der sich im Bereich des Zylinderkörpers 30 befindet. Dieser Drehpunkt D₂ dient zum Erreichen der weiter oben genannten, geringfügigen Schrägstellung des Pneumatikzylinders 27.

Den Kopplungselementen 19, 20 kann ein Mittel 31 zum Abscheren von im Bereich der Trennfläche bzw. Dichtfläche 18 befindlichen Filterstäben 50 zugeordnet sein. Das Mittel 31 umfasst in der gezeigten Ausführungsform zwei Messer 32, 33. Jedem Kopplungselement 19, 20 ist jeweils ein Messer 32, 33 zugeordnet, wobei die Messer 32, 33 derart angeordnet sind, dass sie beim Öffnen der Rohrleitung 16 bzw. beim Auseinanderbewegen der Kopplungselemente 19, 20 insbesondere bei der erwähnten Schrägstellung des Pneumatikzylinders 27 aufeinander abgleiten. Die Messer 32, 33 können einfache Klingen sein. Andere aktive oder passive Trennmittel, die einseitig an einem der Kopplungselemente 19 oder 20 oder beidseitig an beiden Kopplungselementen 19 und 20 angeordnet sein können, sind aber ebenfalls einsetzbar.

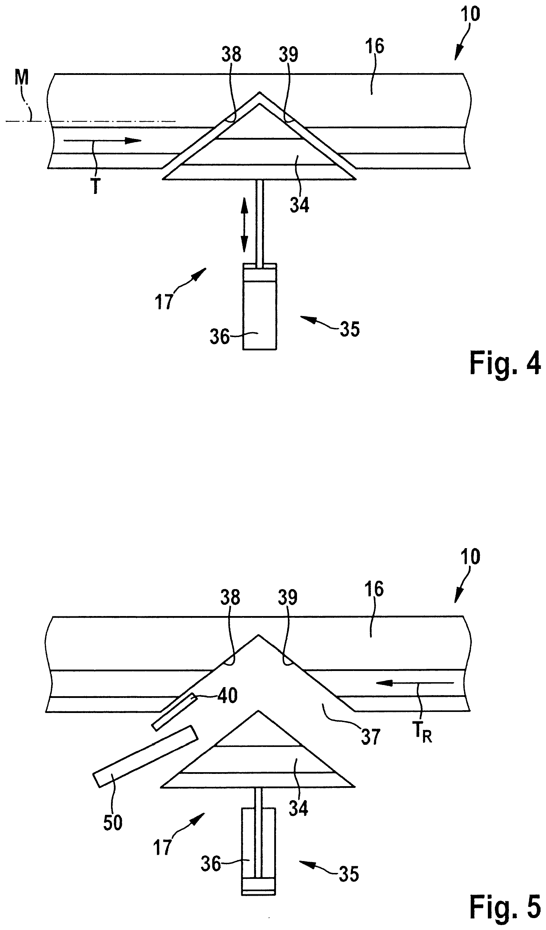

Anhand der Figuren 4 und 5 wird eine weitere bevorzugte Ausführungsform beschrieben, bei der die Ausschleuseeinheit 17 aus einem sich nur teilweise über den Umfang der Rohrleitung 16 erstreckenden Rohrabschnitt 34 der Rohrleitung 16 selbst gebildet ist. Einfach ausgedrückt besteht der Rohrabschnitt 34 aus einem aus der Rohrleitung 16 bzw. deren zylindrischer Mantelfläche getrennten Abschnitt. Dieser Rohrabschnitt 34 ist mittels eines Antriebs 35 auf die Rohrleitung 16 zu und von dieser weg bewegbar. Die bevorzugte Bewegungsrichtung ist dabei senkrecht zur Transportrichtung T gerichtet. Als Antrieb 35 ist in bevorzugter Ausführung ein Pneumatikzylinder 36 vorgesehen. Andere Antriebsmittel sind aber ebenfalls einsetzbar. Der Rohrabschnitt 34 passt formschlüssig in die entsprechende Ausnehmung 37 in der Rohrleitung 16 und ist aus der Seitenansicht dreieckförmige ausgebildet. Dadurch bilden sich zwei Dichtflächen 38, 39, die gegenüber der Rohrleitung 16 abgeschrägt sind. Bezogen auf die Mittelachse M der Rohrleitung 16 stehen die beiden Dichtflächen 38, 39 in einem Winkel von etwa 45° und entsprechend 90° zueinander. Die Größe des Winkels kann auch von 45° abweichen. Mit "etwa" wird ein Winkel bezeichnet, der um wenige Grad von 45° abweicht. Anders ausgedrückt kommt es nicht auf jeden einzelnen Winkelgrad an. In anderen nicht gezeigten Ausführungsformen kann dieser Winkel aber z.B. auch 30° zur Mittelachse M betragen.

Im Bereich beider Dichtflächen 38, 39 sind nicht explizit dargestellte Dichtmittel vorgesehen, beispielsweise in Form von Flachdichtungen oder dergleichen. Die aus der Rohrleitung 16 herauslösbaren bzw. bewegbaren Rohrabschnitte 34 können auch anderen Formen aufweisen und insbesondere auch als Klapp- oder Schwenkelemente ausgebildet sein. In der Förderstellung der Ausschleuseeinheit 17 besteht eine durchgängige Rohrleitung 16. In der Ausschleusestellung der Ausschleuseeinheit 17, in der der Rohrabschnitt 34 vollständig von der Rohrleitung 16 wegbewegt ist, derart, dass eine offene, unterbrochene Rohrleitung 16 besteht, können die Filterstäbe 50 aus beiden Enden der Rohrleitung 16 ausgeblasen werden. Um das sichere Austreten der Filterstäbe 50 aus der Rohrleitung zu unterstützen und insbesondere zu verhindern, dass Filterstäbe 50 die Ausnehmung 37 überbrückend von einem Ende der Rohrleitung 16 in das andere Ende der Rohrleitung 16 geblasen werden, kann optional ein Ablenkmittel 40 vorgesehen sein. Das Ablenkmittel 40 ist zum Eingriff in den durch die Rohrleitung 16 definierten Förderweg ausgebildet und eingerichtet. Das Ablenkmittel 40 kann ein mechanisches Bauteil sein, beispielsweise in Form eines Ablenkbleches, das aus einer Warteposition in eine Ablenkposition und zurück bewegbar ist. In einer anderen Variante kann das Ablenkmittel 40 auch eine schaltbare Druckluftdüse sein, die auf den Förderweg gerichtet ist, um die vorbeiströmenden Filterstäbe 50 abzulenken. Andere feststehende oder bewegbare Ablenkmittel 40 sind aber ebenfalls einsetzbar.

Die Rohrleitung 16 ist in dieser Ausführungsform bevorzugt als starres bzw. steifes Bauteil ausgebildet und an einem Stütz- oder Rahmenelement befestigt, um beim Bewegen des Rohrabschnitts 34 in die dichtende Förderstellung zum Schließen der Rohrleitung 16 eine Gegenkraft zu der Kraftkomponente des Antriebs 35 bzw. Pneumatikzylinders 36 aufbringen zu können.

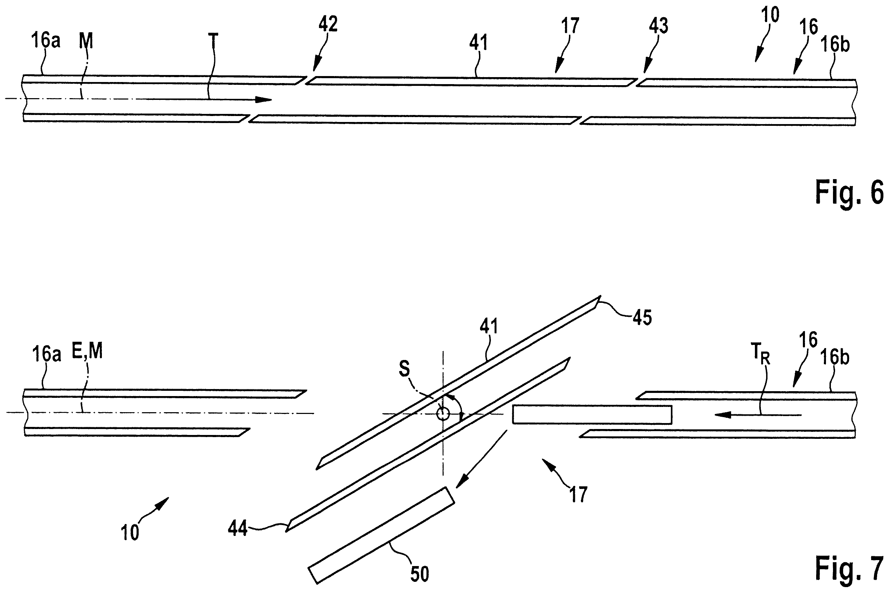

Eine weitere bevorzugte Ausführungsform wird anhand der Figuren 6 und 7 erläutert. Die Ausschleuseeinheit 17 ist aus einem Rohrsegment 41 gebildet, das Bestandteil der Rohrleitung 16 ist. Dieses Rohrsegment 41 ist als Ganzes um eine senkrecht zur Mittelachse M der Rohrleitung 16 verlaufende Achse S schwenkbar gegenüber der Rohrleitung 16 bzw. den Rohrleitungsabschnitten 16a, 16b ausgebildet. Einfach ausgedrückt ist ein Teil der Rohrleitung 16 aus dieser herausgeschnitten und als Rohrsegment 41 schwenkbar eingesetzt, so dass in der Förderstellung der Ausschleuseeinheit 17 die durchgängige Rohrleitung 16 mit zwei Trennfugen 42, 43 besteht. Zum Schalten der Ausschleuseeinheit 17 in die Ausschleusestellung ist das Rohrsegment 41 um die Achse S, die bezogen auf die Länge des Rohrsegments 41 etwa mittig angeordnet ist und parallel zur Transportebene E der Filterstäbe 50 verläuft, schwenkbar.

Wie erwähnt weist diese Ausschleuseeinheit 17 zwei Trennfugen 42, 43 auf, wobei im Bereich jeder Trennfuge 42, 43 eine Dichtfläche 44, 45 ausgebildet ist. Das Rohrsegment 41 weist an seinen entgegengesetzten freien Enden jeweils eine gegenüber der Rohrleitung 16 abgeschrägte Dichtfläche 44, 45 auf. Im Bereich jeder Dichtfläche 44, 45 ist jeweils ein nicht explizit dargestelltes Dichtmittel z.B. in Form von diagonal eingesetzten Dichtringen angeordnet. Die Dichtflächen 44, 45 sind gegenüber der Mittelachse M der Rohrleitung um einen Winkel von etwa 45° geneigt. Die Größe des Winkels kann auch von 45° abweichen. Mit "etwa" wird ein Winkel bezeichnet, der um wenige Grad von 45° abweicht. Anders ausgedrückt kommt es nicht auf jeden einzelnen Winkelgrad an. In anderen nicht gezeigten Ausführungsformen kann dieser Winkel aber z.B. auch 30° zur Mittelachse M betragen. Die Dichtflächen 44, 45 sind vorzugsweise parallel zueinander ausgerichtet.

Der Rohrabschnitt 41 dient in der Ausschleusestellung gleichzeitig als Ablenkmittel, so dass auf zusätzliche Bauelemente zum Ablenken der Filterstäbe 50 beim Ausblasen derselben aus der Rohrleitung 16 verzichtet werden kann. Die Rohrleitung 16 und das Rohrsegment 41, die bevorzugt als starres bzw. steifes Bauteil ausgebildet sind, sind vorzugsweise an einem gemeinsamen Stütz- bzw. Rahmenelement angeordnet und befestigt.

Mit einer erfindungsgemäßen Einrichtung 10 kann die Rohrstaubehebung wie folgt ausgeführt werden:
Nach dem Auflösen der Druckdichtigkeit der Rohrleitung 16 z.B. durch entsprechende Entlüftungsmittel ist die Rohrleitung 16 im Bereich der Ausschleuseeinheit 17 zu öffnen, indem die Ausschleuseeinheit 17 oder Teile davon weg- oder auseinandergeschwenkt werden. Durch das Schwenken und/oder durch aktives Schneiden können im Bereich der oder jeder Trennfuge 23, 42, 43 befindliche Filterstäbe 50 optional abgeschert werden, wobei beim Abscheren Kraftkomponenten senkrecht zur Schnittrichtung ausgeübt werden. Sobald die im Bereich der oder jeder Trennfuge 23, 42, 43 befindlichen Filterstäbe 50 freigeschnitten und sämtliche in der Rohrleitung 16 befindlichen Filterstäbe aus allen freien Enden der Rohrleitung 16 vorzugsweise in Richtung T_{R} entgegen der Transportrichtung T ausgeblasen wurden, kann die Rohrleitung 16 wieder geschlossen und die Druckdichtigkeit hergestellt werden.

Am Beispiel der Ausführungsform der Figuren 2 und 3 wird zum Öffnen der Rohrleitung 16 das bewegbare Kopplungselement 20 mittels des Pneumatikzylinders 27 aus der zylindrischen Schale des ortsfesten Kopplungselementes 19 gezogen. Dabei gleiten die beiden Messer 32, 33 insbesondere durch die Schrägstellung des Pneumatikzylinders um den Winkel α aufeinander ab. Durch Druckluft können die Filterstäbe 50 aus beiden Rohrabschnitten 16a, 16b ausgeblasen werden. Zum Schließen der Rohrleitung 16 drückt der Pneumatikzylinder 27 das bewegbare Kopplungselement 20 entlang der Linearführung 28 dichtend in das ortsfeste Kopplungselement 19. Dabei zentrieren sich die beiden Rohrenden bzw. Kopplungselemente 19, 20 durch ihre zylindrischen Flächen gegenseitig.

Mit der Ausführungsform gemäß der Figuren 4 und 5 wird die Rohrleitung 16 geöffnet, indem der Rohrabschnitt 34 durch den Pneumatikzylinder 36 nach unten weg aus der Flucht der Rohrleitung 16 bewegt wird. Zum Schließen wird der Rohrabschnitt 34 in entgegengesetzter Richtung wieder nach oben dichtend in die Ausnehmung 37 gedrückt. In der in den Figuren 6 und 7 dargestellten Ausführungsform wird das Rohrsegment 41 zum Öffnen der Rohrleitung 16 um die Achse S geschwenkt. Dabei hängt die Drehrichtung von der Ausrichtung der Schrägstellung der Dichtflächen 44, 45 ab. In der gezeigten Ausführung wird das Rohrsegment 41 zum Öffnen der Rohrleitung 16 entgegen dem Uhrzeigersinn gedreht. Zum Schließen wird in die entgegengesetzte Richtung gedreht, bis das Rohrsegment 41 wieder dichtend an der Rohrleitung 16 bzw. den Rohrleitungsabschnitten 16a, 16b anliegt.

Die erfindungsgemäße Einrichtung 10 eignet sich neben der Rohrstaubehebung, also dem gezielten Auswerfen stabförmiger Artikel, insbesondere auch zum Ausführen eines so genannten Testbetriebs. Dazu können Testartikel, beispielsweise farblich markierte Testfilter, durch die Einrichtung 10 geschossen werden, um zu prüfen, ob die Rohrleitung 16 frei ist. Anstelle der erwähnten Testfilter können auch andere vorzugsweise stabförmige Diagnosemittel für den Testbetrieb eingesetzt werden.

## Patentansprüche

1. Einrichtung (10), ausgebildet und eingerichtet zum Überführen stabförmiger Artikel der Tabak verarbeitenden Industrie von einer Sendereinheit (12) an eine Empfängereinheit (14), umfassend mindestens eine Rohrleitung (16) zum Überführen der Artikel von der Sendereinheit (12) an die Empfängereinheit (14) sowie eine Ausschleuseeinheit (17) zum Ausschleusen der Artikel aus der Rohrleitung (16), wobei die Ausschleuseeinheit (17) aus einer Förderstellung zum Durchleiten der Artikel durch die Rohrleitung (16) in eine Ausschleusestellung zum Ausschleusen der Artikel aus der Rohrleitung (16) und zurück bewegbar ausgebildet ist, wobei, die Ausschleuseeinheit (17) als Teil der Rohrleitung (16) in diese integriert ist, **dadurch gekennzeichnet, dass** die Ausschleuseeinheit (17) zur druckdichten Abdichtung der Rohrleitung (16) bezogen auf die Mittelachse M der Rohrleitung (16) mindestens eine schräge Dichtfläche (18, 38, 39, 44, 45) aufweist.

2. Einrichtung nach Anspruch 1, **dadurch gekennzeichnet, dass** die Ausschleuseeinheit (17) zwei Kopplungselemente (19,20) umfasst, von denen ein Kopplungselement (19) ortsfest fixiert und das andere Kopplungselement (20) relativ zum ortsfesten Kopplungselement (19) bewegbar ausgebildet ist, wobei die Kopplungselemente (19, 20) an ihren einander zugewandten Stirnseiten (21, 22) derart abgeschrägt sind, dass sie unter einem Winkel von 30-60°, bevorzugt von 45° bezogen auf die Mittelachse M der Rohrleitung (16) zur Bildung einer im Bereich einer einzigen Dichtfläche (18) liegenden Trennfuge (23) zueinander stehen.

3. Einrichtung nach Anspruch 2, **dadurch gekennzeichnet, dass** die beiden Kopplungselemente (19, 20) zylindrisch geformt und durch einen im Bereich der abgeschrägten Stirnseiten (21, 22) diagonal eingesetzten Dichtring (24) im Bereich der Dichtfläche (18) gegeneinander abgedichtet sind.

4. Einrichtung nach einem der Ansprüche 1 bis 3, **dadurch gekennzeichnet, dass** die Ausschleuseeinheit (17) an dem der Sendereinheit (12) zugewandten Ende der Rohrleitung (16) angeordnet ist.

5. Einrichtung nach einem der Ansprüche 2 bis 4, **dadurch gekennzeichnet, dass** dem bewegbaren Kopplungselement (20) ein Pneumatikzylinder (27) für eine senkrecht zur Mittelachse M der Rohrleitung (16) gerichtete Bewegung des bewegbaren Kopplungselementes (20) auf das ortsfeste Kopplungselement (19) zu und von diesem weg zugeordnet ist.

6. Einrichtung nach einem der Ansprüche 2 bis 5, **dadurch gekennzeichnet, dass** das bewegbare Kopplungselement (20) in einer senkrecht zur Mittelachse M der Rohrleitung (16) gerichteten Linearführung (28) geführt ist.

7. Einrichtung nach Anspruch 5 oder 6, **dadurch gekennzeichnet, dass** eine Kolbenstange (29) des Pneumatikzylinders (27) beweglich im Bereich eines Drehpunktes D₁ an dem bewegbaren Kopplungselement (20) angeordnet ist.

8. Einrichtung nach einem der Ansprüche 2 bis 7, **dadurch gekennzeichnet, dass** den Kopplungselementen (19, 20) Mittel (31) zum Abscheren von im Bereich der Trennfläche bzw. Dichtfläche (18) befindlichen Artikeln zugeordnet sind.

9. Einrichtung nach Anspruch 1, **dadurch gekennzeichnet, dass** die Ausschleuseeinheit (17) aus einem sich nur teilweise über den Umfang der Rohrleitung (16) erstreckenden Rohrabschnitt (34) der Rohrleitung (16) selbst gebildet ist, wobei der Rohrabschnitt (34) mittels eines Antriebs (35) auf die Rohrleitung (16) zu und von dieser weg bewegbar ausgebildet ist.

10. Einrichtung nach Anspruch 9, **dadurch gekennzeichnet, dass** die Ausschleuseeinheit (17) zusätzlich ein Ablenkmittel (40) umfasst, wobei das Ablenkmittel (40) zum Eingriff in den durch die Rohrleitung (16) definierten Förderweg ausgebildet und eingerichtet ist.

11. Einrichtung nach Anspruch 9 oder 10, **dadurch gekennzeichnet, dass** der Rohrabschnitt (34) dreieckförmig ausgebildet ist und entsprechend zwei gegenüber der Rohrleitung (16) abgeschrägte Dichtflächen (38, 39) aufweist, die jeweils in einem Winkel von 30-60°, bevorzugt von 45° bezogen auf die Mittelachse M der Rohrleitung (16) und entsprechend 90° zueinander stehen.

12. Einrichtung nach Anspruch 1, **dadurch gekennzeichnet, dass** die Ausschleuseeinheit (17) aus einem Rohrsegment (41), das Bestandteil der Rohrleitung (16) ist, gebildet ist, wobei das Rohrsegment (41) um eine senkrecht zur Mittelachse M der Rohrleitung (16) verlaufende Achse S schwenkbar ausgebildet ist.

13. Einrichtung nach Anspruch 12, **dadurch gekennzeichnet, dass** die Achse S, um die das Rohrsegment (41) schwenkbar ist, bezogen auf die Länge des Rohrsegments (41) etwa mittig angeordnet ist und senkrecht zur Mittelachse M verläuft.

14. Einrichtung nach Anspruch 12 oder 13, **dadurch gekennzeichnet, dass** das Rohrsegment (41) an seinen entgegengesetzten freien Enden jeweils eine gegenüber der Rohrleitung (16) abgeschrägte Dichtfläche (44, 45) aufweist.

## Claims

1. Device (10), designed and configured for transferring rod-shaped articles of the tobacco processing industry from a transmitter unit (12) to a receiver unit (14), comprising at least one pipeline (16) for transferring the articles from the transmitter unit (12) to the receiver unit (14) as well as a discharge unit (17) for discharging the articles from the pipeline (16), wherein the discharge unit (17) is designed to be movable out of a conveying position for conveying the articles through the pipeline (16) into a discharge position for discharging the articles from the pipeline (16) and back, wherein the discharge unit (17) as part of the pipeline (16) is integrated therein, **characterised in that** the discharge unit (17) has at least one oblique sealing plane (18, 38, 39, 44, 45) for pressure-tight sealing of the pipeline (16) in relation to the central axis M of the pipeline (16).

2. Device according to claim 1, **characterised in that** the discharge unit (17) comprises two coupling elements (19, 20), one coupling element (19) being fixed in a stationary manner and the other coupling element (20) being movable relative to the fixed coupling element (19), wherein the coupling elements (19, 20) are chamfered on their mutually facing front sides (21, 22) in such a way that they are inclined at an angle of 30-60°, preferably 45°, with respect to the central axis M of the pipeline (16) to form a separating joint (23) situated in the region of a single sealing plane (18).

3. Device according to claim 2, **characterised in that** the two coupling elements (19, 20) are cylindrically shaped and are sealed against each other in the region of the sealing plane (18) by a sealing ring (24) inserted diagonally in the region of the chamfered front sides (21, 22).

4. Device according to one of claims 1 to 3, **characterised in that** the discharge unit (17) is arranged on the end of the pipeline (16) directed towards the transmitter unit (12).

5. Device according to one of claims 2 to 4, **characterised in that** a pneumatic cylinder (27) for moving the movable coupling element (20) perpendicularly to the central axis M of the pipeline (16) towards the stationary coupling element (19) and away therefrom is assigned to the movable coupling element (20).

6. Device according to one of claims 2 to 5, **characterised in that** the movable coupling element (20) is guided in a linear guide (28) directed perpendicular to the central axis M of the pipeline (16).

7. Device according to claim 5 or 6, **characterised in that** a piston rod (29) of the pneumatic cylinder (27) is arranged movably in the region of a pivot point D₁ on the movable coupling element (20).

8. Device according to one of claims 2 to 7, **characterised in that** means (31) for shearing off articles located in the region of the separating plane or sealing plane (18) respectively are assigned to the coupling elements (19, 20).

9. Device according to claim 1, **characterised in that** the discharge unit (17) is formed from a pipe section (34) of the pipeline (16) itself extending only partially over the circumference of said pipeline (16), wherein the pipe section (34) is designed to be movable towards the pipeline (16) and away therefrom by means of a drive (35).

10. Device according to claim 9, **characterised in that** the discharge unit (17) additionally comprises a deflection means (40), wherein the deflection means (40) is designed and configured to engage in the conveying path defined by the pipeline (16).

11. Device according to claim 9 or 10, **characterised in that** the pipe section (34) is triangular in shape and accordingly has two sealing planes (38, 39) chamfered in relation to the pipeline (16) each of which are inclined at an angle of 30-60°, preferably 45°, with respect to the central axis M of said pipeline (16) and are accordingly at 90° to each other.

12. Device according to claim 1, **characterised in that** the discharge unit (17) is formed from a pipe segment (41) which is part of the pipeline (16), wherein the pipe segment (41) is designed to be pivotable about an axis S extending perpendicular to the central axis M of the pipeline (16).

13. Device according to claim 12, **characterised in that** the axis S, about which the pipe segment (41) is pivotable, is arranged approximately centrally with respect to the length of the pipe segment (41) and extends perpendicular to the central axis M.

14. Device according to claim 12 or 13, **characterised in that** the pipe segment (41) has a sealing plane (44, 45) on each of its opposing free ends which is chamfered in relation to the pipeline (16).

## Revendications

1. Dispositif (10), conçu et agencé pour le transfert d'articles en forme de tiges de l'industrie de transformation du tabac d'une unité émettrice (12) à une unité réceptrice (14), comprenant au moins un conduit (16) pour le transfert des articles de l'unité émettrice (12) à l'unité réceptrice (14) ainsi qu'une unité d'évacuation (17) pour évacuer les articles du conduit (16), l'unité d'évacuation (17) étant réalisée de manière déplaçable d'une position de transport pour le passage des articles à travers le conduit (16) dans une position d'évacuation pour évacuer les articles du conduit (16) et inversement, l'unité d'évacuation (17) étant intégrée dans le conduit (16) en tant que partie de celui-ci,
**caractérisé en ce que** l'unité d'évacuation (17) présente, par rapport à l'axe médian M du conduit (16), au moins une surface d'étanchéité oblique (18, 38, 39, 44, 45) pour l'étanchéisation à la pression du conduit (16).

2. Dispositif selon la revendication 1, **caractérisé en ce que** l'unité d'évacuation (17) comprend deux éléments d'accouplement (19, 20), dont un élément d'accouplement (19) est fixé de manière stationnaire et l'autre élément d'accouplement (20) est réalisé de manière déplaçable par rapport à l'élément d'accouplement fixe (19), les éléments d'accouplement (19, 20) étant biseautés sur leurs faces frontales (21, 22) orientées l'une vers l'autre de façon à former entre eux un angle de 30-60°, de préférence de 45°, par rapport à l'axe médian M du conduit (16) pour former une ligne de joint (23) située dans la région d'une surface d'étanchéité (18) unique.

3. Dispositif selon la revendication 2, **caractérisé en ce que** les deux éléments d'accouplement (19, 20) sont de forme cylindrique et rendus mutuellement étanches dans la région de la surface d'étanchéité (18) par une bague d'étanchéité (24) insérée diagonalement dans la zone des faces frontales biseautées (21, 22).

4. Dispositif selon l'une des revendications 1 à 3, **caractérisé en ce que** l'unité d'évacuation (17) est disposée sur l'extrémité du conduit (16) orientée vers l'unité émettrice (12).

5. Dispositif selon l'une des revendications 2 à 4, **caractérisé en ce qu'**est associé à l'élément d'accouplement déplaçable (20) un vérin pneumatique (27) permettant un mouvement de l'élément d'accouplement déplaçable (20) dans une direction perpendiculaire à l'axe médian M du conduit (16) pour se rapprocher et s'éloigner de l'élément d'accouplement fixe (19).

6. Dispositif selon l'une des revendications 2 à 5, **caractérisé en ce que** l'élément d'accouplement déplaçable (20) est guidé par un guide linéaire (28) orienté dans une direction perpendiculaire à l'axe médian M du conduit (16).

7. Dispositif selon l'une des revendications 5 ou 6, **caractérisé en ce qu'**une tige de piston (29) du vérin pneumatique (27) est disposée mobile dans la région d'un point de rotation D₁ sur l'élément d'accouplement déplaçable (20).

8. Dispositif selon l'une des revendications 2 à 7, **caractérisé en ce que** sont associés aux éléments d'accouplement (19, 20) des moyens (31) pour cisailler des articles se trouvant dans la zone de la surface de séparation ou de la surface d'étanchéité (18).

9. Dispositif selon la revendication 1, **caractérisé en ce que** l'unité d'évacuation (17) est formée d'une portion tubulaire (34) du conduit (16) lui-même, ne s'étendant que partiellement sur la périphérie du conduit (16), la portion tubulaire (34) étant réalisée de manière déplaçable au moyen d'une commande d'entraînement (35) de façon à s'approcher et s'éloigner du conduit (16).

10. Dispositif selon la revendication 9, **caractérisé en ce que** l'unité d'évacuation (17) comprend, en outre, un moyen déflecteur (40), le moyen déflecteur (40) étant réalisé et agencé pour s'engager dans le trajet de transport défini par le conduit (16).

11. Dispositif selon la revendication 9 ou 10, **caractérisé en ce que** la portion tubulaire (34) est réalisée en forme de triangle et présente en conséquence deux surfaces d'étanchéité (38, 39) biseautées par rapport au conduit (16), lesquelles forment respectivement un angle de 30-60°, de préférence 45° par rapport à l'axe médian M du conduit (16) et par conséquent de 90° entre elles.

12. Dispositif selon la revendication 1, **caractérisé en ce que** l'unité d'évacuation (17) est formée d'un segment tubulaire (41), partie intégrante du conduit (16), le segment tubulaire (41) étant réalisé de manière à pouvoir pivoter autour d'un axe S s'étendant perpendiculairement à l'axe médian M du conduit (16).

13. Dispositif selon la revendication 12, **caractérisé en ce que** l'axe S, autour duquel peut pivoter le segment tubulaire (41), est disposé sensiblement au centre par rapport à la longueur du segment tubulaire (41) et s'étend perpendiculairement à l'axe médian M.

14. Dispositif selon la revendication 12 ou 13, **caractérisé en ce que** le segment tubulaire (41) présente, à ses extrémités libres opposées, respectivement une surface d'étanchéité (44, 45) biseautée par rapport au conduit (16).
